# DEMANDE DE BREVET EUROPEEN

(11) **EP 0 661 239 A1**
(43) Date de publication de la demande: **05.07.1995**
(21) Numéro de dépôt: 94402858.8
(22) Date de dépôt: 12.12.1994
(51) Int. Cl.: C02F 3/28

(54) **Perfectionnements apportés au procédé de digestion anaérobie d'effluents liquides**

(30) Priorité: 30.12.1993 FR 9315928
(71) Demandeur: DEGREMONT, F-92508 Rueil-Malmaison Cédex (FR)
(72) Inventeur: Delporte, Claude, F-92500 Rueil Malmaison (FR); Jacquart, Jean-Claude, F-75003 Paris (FR)
(74) Mandataire: Armengaud Ainé, Alain

(57) **Abrégé**

Procédé de digestion anaérobie pour l'élimination des matières organiques contenues dans un effluent liquide, notamment de l'eau brute, consistant à soumettre ledit effluent à une étape d'acidogénèse puis à une étape de méthanogénèse, caractérisé en ce que l'on soumet l'effluent, ayant subi l'étape d'acidogénèse à une étape de décantation, avant l'étape de méthanogénèse, une partie au moins des boues décantées lors de cette étape intermédiaire de décantation et une partie de l'eau traitée étant recyclées vers l'étape d'acidogénèse.

## Description

La présente invention est relative à des perfectionnements apportés au procédé de digestion anaérobie d'effluents liquides.

On sait que dans les stations d'épuration des effluents liquides on met en oeuvre un processus de méthanisation. Ce dernier se traduit par une fermentation anaérobie réalisée par une population bactérienne et il comporte une étape d'acidogénèse donnant lieu à une production d'acides gras volatils, cette étape étant suivie de l'étape de méthanogénèse produisant du méthane.

La présente invention se propose de perfectionner un tel procédé en optimisant l'étape d'acidogénèse en vue d'accroître le rendement de la production d'acides gras volatils et d'obtenir un meilleur fonctionnement de l'étape de méthanisation.

En conséquence, cette invention concerne un procédé de digestion anaérobie pour l'élimination des matières organiques contenues dans un effluent liquide, notamment de l'eau brute, consistant à soumettre ledit effluent à une étape d'acidogénèse puis à une étape de méthanogénèse, ce procédé étant caractérisé en ce que l'on soumet l'effluent, ayant subi l'étape d'acidogénèse, à une étape de décantation, avant l'étape de méthanogénèse, une partie au moins des boues décantées lors de cette étape intermédiaire de décantation et une partie de l'eau traitée étant recyclées vers l'étape d'acidogénèse.

Selon l'invention, l'étape intermédiaire de décantation peut comporter une addition de polymères.

Selon un mode préféré de mise en oeuvre de l'invention, l'étape intermédiaire de décantation peut être réalisée dans le réacteur d'acidogénèse.

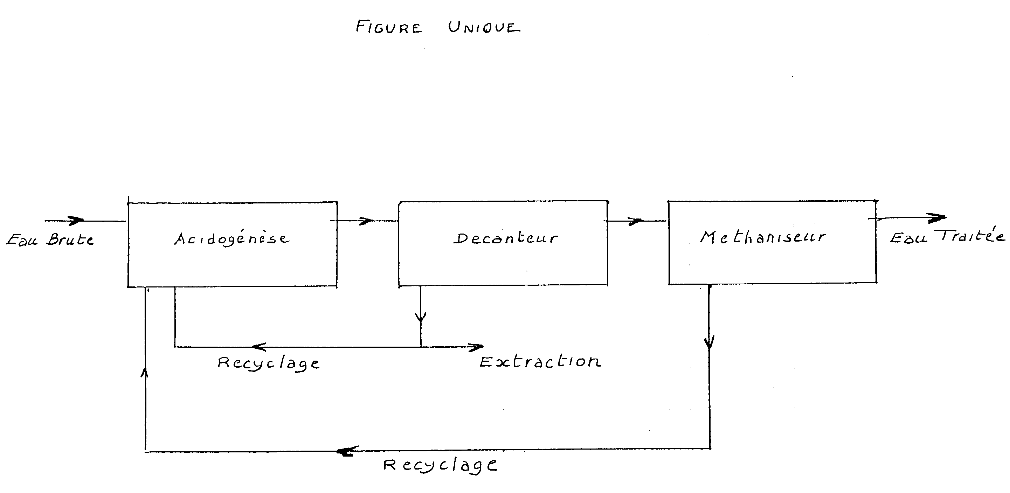

D'autres caractéristiques et avantages de cette invention ressortiront de la description faite ci-après en référence au dessin annexé dont la figure unique est un schéma illustrant les différentes étapes du procédé objet de l'invention.

L'examen de la figure unique montre que l'invention introduit une étape intermédiaire de décantation avec ou sans polymères, entre l'acidogénèse et la méthanogénèse. On peut ainsi récupérer les boues de l'étape d'acidogénèse et recycler vers l'acidogénèse une partie ou la totalité des boues décantées et une partie de l'eau traitée, ce qui permet de maintenir un ensemencement continu et un apport d'alcalinité.

L'étape de décantation peut être mise en oeuvre dans un décanteur lamellaire et elle peut être intégrée à l'étape d'acidogénèse en la mettant en oeuvre dans le réacteur d'acidogénèse.

On a donné ci-après à titre d'exemple non limitatif des résultats obtenus par la mise en oeuvre du procédé défini ci-dessus, dans un pilote de laboratoire (volume 10 litres-acidogénèse) et dans un pilote semi-industriel (acidogénèse:volume 50 litres ; méthanogénèse: volume 100 litres).

| | | | Méthanogénèse | |
|---|---|---|---|---|
| | Eau brute D C O | Acidogénèse Acides gras volatils % D C O | Charge appliquée Kg DCO/m³J | Rendement d'élimination % D C O |
| Procédé classique | 6.5 g/l | 10 à 25 | 25 à 40 | 75 à 85 |
| Procédé selon l'invention | 6.5 g/l | 30 à 90 | 35 à 90 | 75 à 95 |

L'examen des résultats ainsi obtenus montre que ce procédé de l'invention associe une optimisation permettant une forte production d'acides gras volatils représentant 30 à 90 % de la pollution soluble ce qui se traduit par un meilleur fonctionnement de l'étape de méthanisation sur les charges appliquées et sur la qualité de l'eau traitée. Il en résulte également une réduction importante des volumes mis en oeuvre, la réduction du temps de séjour de l'effluent dans l'étape d'acidogénèse permettant une diminution du volume du réacteur d'acidogénèse par un facteur de 3 à 8.

Il demeure bien entendu que l'invention n'est pas limitée aux modes de mise en oeuvre décrits et représentés mais qu'elle englobe toutes les variantes.

## Revendications

1. Procédé de digestion anaérobie pour l'élimination des matières organiques contenues dans un effluent liquide, notamment de l'eau brute, consistant à soumettre ledit effluent à une étape d'acidogénèse puis à une étape de méthanogénèse, caractérisé en ce que l'on soumet l'effluent, ayant subi l'étape d'acidogénèse à une étape de décantation, avant l'étape de méthanogénèse, une partie au moins des boues décantées lors de cette étape intermédiaire de décantation et une partie de l'eau traitée étant recyclées vers l'étape d'acidogénèse.

2. Procédé selon la revendication 1, caractérisé en ce que l'étape intermédiaire de décantation comporte une addition de polymères.

3. Procédé selon l'une des revendications 1 ou 2, caractérisé en ce que l'étape intermédiaire de décantation est mise en oeuvre dans le réacteur d'acidogénèse.
